(19) 

Europäisches
Patentamt
European
Patent Office
Office européen
des brevets

(11) **EP 4 538 098 A1**

(12) **EUROPEAN PATENT APPLICATION**
published in accordance with Art. 153(4) EPC

(43) Date of publication:
**16.04.2025 Bulletin 2025/16**

(21) Application number: **23819105.0**

(22) Date of filing: **06.06.2023**

(51) International Patent Classification (IPC):
*B60L 15/20* (2006.01)     *B60L 7/10* (2006.01)

(86) International application number:
**PCT/CN2023/098553**

(87) International publication number:
**WO 2023/236940 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.06.2022   CN 202210644873**

(71) Applicant: **Beijing Co Wheels Technology Co.,
Ltd.
Beijing 101300 (CN)**

(72) Inventor: **YAN, Zhongyi
Beijing 101300 (CN)**

(74) Representative: **Maiwald GmbH
Elisenhof
Elisenstraße 3
80335 München (DE)**

(54) **VEHICLE ENERGY RECOVERY TORQUE DISTRIBUTION METHOD AND APPARATUS, ELECTRONIC DEVICE, AND STORAGE MEDIUM**

(57)     A vehicle energy recovery torque distribution method, comprising: obtaining an actual yaw rate of a vehicle in a traveling process; and determining a first distribution parameter of front and rear axle torque according to the actual yaw rate, the first distribution parameter being a stability distribution parameter of the front and rear axle torque of the vehicle. According to the distribution method, the stability of the vehicle can be improved on the basis of ensuring energy recovery economy of the vehicle. Also disclosed is a vehicle energy recovery torque distribution apparatus.

```
┌─────────────────────────────────────────────────────┐
│  acquiring an actual yaw rate of the vehicle in a    │ ～ S10
│                driving process                        │
└─────────────────────────────────────────────────────┘
                          │
                          ▼
┌─────────────────────────────────────────────────────┐
│  determining a first distribution parameter of the   │
│  front and rear axle torques according to the actual │ ～ S30
│  yaw rate, in which the first distribution parameter  │
│  is a stability distribution parameter of the front   │
│     and rear axle torques of the vehicle              │
└─────────────────────────────────────────────────────┘
```

FIG. 1

# Description

## CROSS-REFERENCE TO RELATED APPLICATIONS

This application is based on and claims priority to Chinese Patent Application No. 202210644873.0, filed on June 8, 2022, the entire contents of which are incorporated herein by reference.

## TECHNICAL FIELD

The disclosure relates to a field of intelligent control technologies, and particularly to a method and an apparatus for distributing an energy recovery torque of a vehicle, an electronic device and a storage medium.

## BACKGROUND

A new energy vehicle can achieve energy recovery during deceleration braking of the vehicle through an energy recovery system. The specific recovery mode is that a motor is switched to a power generation mode during deceleration braking of the vehicle, and the motor converts energy into electric energy and stores the electric energy in a battery while assisting in braking, to improve energy utilization efficiency of the whole vehicle and increase a driving mileage of the whole vehicle. Since the method for energy recovery relates to operation of a braking system, the energy recovery must be performed on the basis of ensuring stability of the vehicle, which requires a reasonable braking energy recovery system of the electric vehicle and a corresponding control method to manage a recovery process. For a four-wheel drive vehicle, how to reasonably distribute torques of front and rear axles of the vehicle and to ensure stability of the vehicle is an urgent technical problem that the four-wheel drive new energy vehicle needs to solve.

In the related art, a method for distributing an energy recovery torque of the four-wheel drive new energy vehicle performs torque distribution based on a fixed front-rear torque distribution ratio. However, the fixed front-rear torque distribution proportion cannot ensure a vehicle attitude stability, and safety of the whole vehicle is poor.

## SUMMARY

In order to solve the above technical problem or at least partially solve the above technical problem, a method and an apparatus for distributing an energy recovery torque of a vehicle, an electronic device and a storage medium are provided in the present disclosure.

In a first aspect, a method for distributing an energy recovery torque of a vehicle is provided in embodiments of the present disclosure, and includes:

> acquiring an actual yaw rate of the vehicle in a driving process; and

determining a first distribution parameter of the front and rear axle torques according to the actual yaw rate, in which the first distribution parameter is a stability distribution parameter of the front and rear axle torques of the vehicle.

In some embodiments, before determining the first distribution parameter of the front and rear axle torques according to the actual yaw rate, the method further includes:
determining a target yaw rate of the vehicle, a maximum yaw rate of the vehicle, and a first initial distribution parameter of the front and rear axle torques of the vehicle.

Determining the first distribution parameter of the front and rear axle torques according to the actual yaw rate includes:
obtaining the first distribution parameter by correcting the first initial distribution parameter according to a relationship between the actual yaw rate and the target yaw rate or a relationship between the actual yaw rate and a maximum yaw acceleration.

In some embodiments, determining the target yaw rate of the vehicle, the maximum yaw rate of the vehicle, and the first initial distribution parameter of the front and rear axle torques of the vehicle includes:

> acquiring a steering wheel angle, a wheelbase, a wheel tread, an actual deceleration, an actual lateral acceleration, an actual vehicle speed and a road adhesion coefficient of the vehicle;
> determining the target yaw rate of the vehicle according to the steering wheel angle, the wheelbase, the wheel tread and the actual vehicle speed;
> determining the maximum yaw rate according to the road adhesion coefficient; and
> determining the first initial distribution parameter of the front and rear axle torques of the vehicle according to the actual yaw rate, the actual deceleration, the actual lateral acceleration and the actual vehicle speed.

In some embodiments, the method is characterized in that,
determining the target yaw rate of the vehicle according to the steering wheel angle, the wheelbase, the wheel tread and the actual vehicle speed includes:

> determining an initial yaw rate according to the steering wheel angle, the wheelbase, the wheel tread and the actual vehicle speed;
> obtaining an initial yaw rate correction parameter according to the actual vehicle speed and a characteristic vehicle speed, in which the characteristic vehicle speed is a vehicle speed that the vehicle responds to a control action; and
> determining the target yaw rate of the vehicle according to the initial yaw rate and the initial yaw rate correction parameter.

Determining the first initial distribution parameter of the front and rear axle torques of the vehicle according to the actual yaw rate, the actual deceleration, the actual lateral acceleration and the actual vehicle speed includes:

determining a first sub-initial distribution parameter of the front and rear axle torques of the vehicle according to the actual yaw rate and the actual deceleration;
determining a second sub-initial distribution parameter of the front and rear axle torques of the vehicle according to the actual lateral acceleration and the actual vehicle speed; and
determining the first initial distribution parameter according to the first sub-initial distribution parameter and the second sub-initial distribution parameter.

In some embodiments, the method further includes:

acquiring a road condition, a driving condition, an actual vehicle speed and a torque request of the vehicle in the driving process;
determining a second distribution parameter of the front and rear axle torques according to the actual vehicle speed and the torque request, in which the second distribution parameter is an economic distribution parameter of the front and rear axle torques of the vehicle;
determining a first fusion parameter corresponding to the first distribution parameter according to the road condition and the driving condition; and
determining a distribution parameter of the front and rear axle torques of the vehicle according to the first fusion parameter, the first distribution parameter and the second distribution parameter.

In some embodiments, the first distribution parameter includes a first front axle torque distribution parameter and a first rear axle torque distribution parameter, and the second distribution parameter includes a second front axle torque distribution parameter and a second rear axle torque distribution parameter; in which determining the distribution parameter of the front and rear axle torques of the vehicle according to the first fusion parameter, the first distribution parameter or the second distribution parameter includes:

determining a second fusion parameter corresponding to the second distribution parameter according to the first fusion parameter;
determining a front axle torque distribution parameter of the vehicle according to the first fusion parameter, the first front axle torque distribution parameter, the second fusion parameter and the second front axle torque distribution parameter; and determining a rear axle torque distribution parameter of the vehicle according to the first fusion parameter, the first rear axle torque distribution parameter, the second fusion parameter and the second rear axle torque distribution parameter.

In some embodiments, before acquiring the road condition, the driving condition, the actual vehicle speed and the torque request of the vehicle in the driving process, the method further includes: determining the driving condition according to the actual yaw rate of the vehicle, an actual longitudinal acceleration of the vehicle, an actual lateral acceleration of the vehicle and the actual vehicle speed.

In a second aspect, an apparatus for distributing an energy recovery torque of a vehicle is provided in embodiments of the present disclosure, and includes:

an information acquiring module, configured to acquire an actual yaw rate of the vehicle in a driving process; and
a first distribution parameter determining module, configured to determine a first distribution parameter of front and rear axle torques according to the actual yaw rate, in which the first distribution parameter is a stability distribution parameter of the front and rear axle torques of the vehicle.

In a third aspect, an electronic device is provided in embodiments of the present disclosure, and includes:

one or more processors; and
a storage device for storing one or more programs, in which when the one or more programs are executed by the one or more processors, the one or more processors are caused to implement the method as described in any one of the first aspect.

In a fourth aspect, a computer storage medium is provided in embodiments of the present disclosure. A computer program is stored on the storage medium. When the computer program is executed by a processor, the method as described in any one of the first aspect is implemented.

In a fifth aspect, a computer program product is further provided in embodiments of the present disclosure. The computer program product includes a computer program or instruction. When the computer program or instruction is executed by a processor, the method as described in any one of the first aspect is implemented.

The method and the apparatus for distributing the energy recovery torque of the vehicle, the electronic device and the storage medium provided in the embodiments of the disclosure acquire the actual yaw rate of the vehicle in the driving process first; and determine the first distribution parameter of the front and rear axle torques according to the actual yaw rate of the vehicle. Since the first distribution parameter of the front and rear axle torques is determined according to the actual yaw rate of the vehicle, the first distribution parameter of the front and rear axle torques can be determined according to the yaw rate of the vehicle in the actual driving process, which ensures safety of the vehicle.

## BRIEF DESCRIPTION OF THE DRAWINGS

The drawings herein are incorporated into the specification and constitute a part of the specification, show embodiments in conformity with the present disclosure, and explain the principle of the present disclosure together with the specification.

In order to explain the technical solutions in the embodiments of the present disclosure or in the related art more clearly, the drawings described in the embodiments or the related art will be briefly introduced below. Obviously, those skilled in the art may obtain other drawings based on the drawings without any creative work.

FIG. 1 is a flowchart illustrating a method for distributing an energy recovery torque of a vehicle according to an embodiment of the present disclosure.

FIG. 2 is a flowchart illustrating another method for distributing an energy recovery torque of a vehicle according to an embodiment of the present disclosure.

FIG. 3 is a flowchart illustrating another method for distributing an energy recovery torque of a vehicle according to an embodiment of the present disclosure.

FIG. 4 is a flowchart illustrating another method for distributing an energy recovery torque of a vehicle according to an embodiment of the present disclosure.

FIG. 5 is a flowchart illustrating another method for distributing an energy recovery torque of a vehicle according to an embodiment of the present disclosure.

FIG. 6 is a structural diagram illustrating an apparatus for distributing an energy recovery torque of a vehicle according to an embodiment of the present disclosure.

FIG. 7 is a structural diagram illustrating an electronic device according to an embodiment of the present disclosure.

## DETAILED DESCRIPTION

In order to understand the above purpose, features and advantages of the present disclosure more clearly, solutions of the present disclosure may be further described below. It should be noted that, embodiments of the present disclosure may be combined with features in the embodiments without conflict.

Numerous specific details are set forth in the following description to facilitate a thorough understanding of the present disclosure. However, the present disclosure may also be implemented in other different ways than those described herein; obviously, the embodiments in the specification are only a part of embodiments of the present disclosure rather than all embodiments.

Based on the problem in the related art, a method for distributing an energy recovery torque of a vehicle is provided according to the embodiments of the present disclosure. The method for distributing the energy recovery torque of the vehicle is applicable to a terminal device. The terminal device may be a distribution device dedicated to distributing energy recovery torque conditions of the vehicle, or may be executed by a terminal device of an existing vehicle. The terminal device of the vehicle may be, for example, a vehicle-mounted main control module. Technical solutions of the present disclosure are described below with several embodiments.

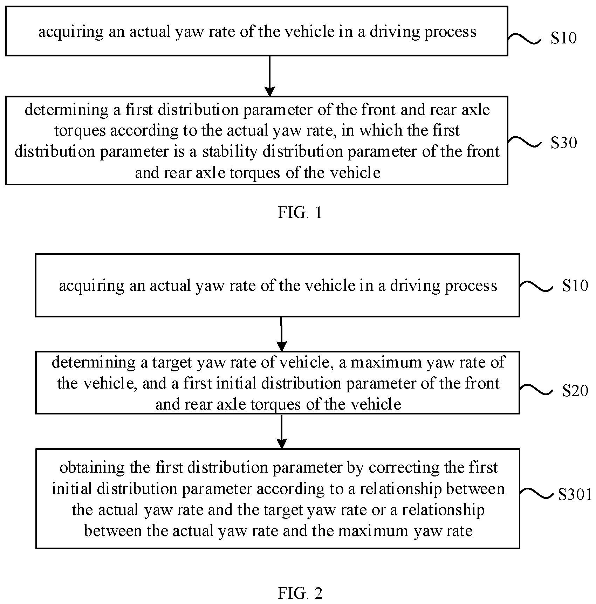

FIG. 1 is a flowchart illustrating a method for distributing an energy recovery torque of a vehicle in the present disclosure. As illustrated in FIG. 1, the method in the embodiment is as follow.

At S 10, an actual yaw rate of the vehicle in a driving process is acquired.

The actual yaw rate of the vehicle may be determined based on a yaw rate of the vehicle acquired by a vehicle sensor.

At S30, a first distribution parameter of front and rear axle torques is determined according to the actual yaw rate. The first distribution parameter is a stability distribution parameter of the front and rear axle torques of the vehicle.

The first distribution parameter of the front and rear axle torques refers to a distribution parameter for distributing torque values of an engine to the front and rear axles of the vehicle based on vehicle stability consideration during vehicle braking. For example, if the first distribution parameter of the front and rear axle torques is (0.3, 0.7), and the torque value of the engine during braking of the vehicle is 200, a torque value distributed to the front axle of the vehicle is 60, and a torque value distributed to the rear axle of the vehicle is 140.

That is, in the method for distributing the energy recovery torque of the vehicle provided by the embodiment of the present disclosure, in a process of distributing the vehicle energy recovery torque, the front and rear axle torques are distributed based on the first distribution parameter, and the first distribution parameter is the stability distribution parameter of the front and rear axle torques of the vehicle, so that when the vehicle performs energy recovery in a braking process, the front and rear axle torques can be distributed based on the actual yaw rate of the vehicle in the driving process, and the energy recovery can be achieved while ensuring the vehicle stability, which ensures safety of the vehicle.

The method for distributing the energy recovery torque of the vehicle in the embodiment of the present disclosure acquires the actual yaw rate of the vehicle in the driving process first; and determines the first distribution parameter of the front and rear axle torques according to the actual yaw rate of the vehicle. Since the first distribution parameter of the front and rear axle torques is determined according to the actual yaw rate, the first distribution parameter of the front and rear axle torques can be determined according to the yaw rate of the vehicle in the actual driving process, which ensures safety of the vehicle.

FIG. 2 is a flowchart illustrating another method for distributing an energy recovery torque of a vehicle according to an embodiment of the present disclosure. The embodiment of the present disclosure is on the basis of the above embodiment. As illustrated in FIG. 2, before step S30, the method further includes the following steps.

At S20, a target yaw rate of the vehicle, a maximum yaw rate of the vehicle, and a first initial distribution parameter of the front and rear axle torques of the vehicle are determined.

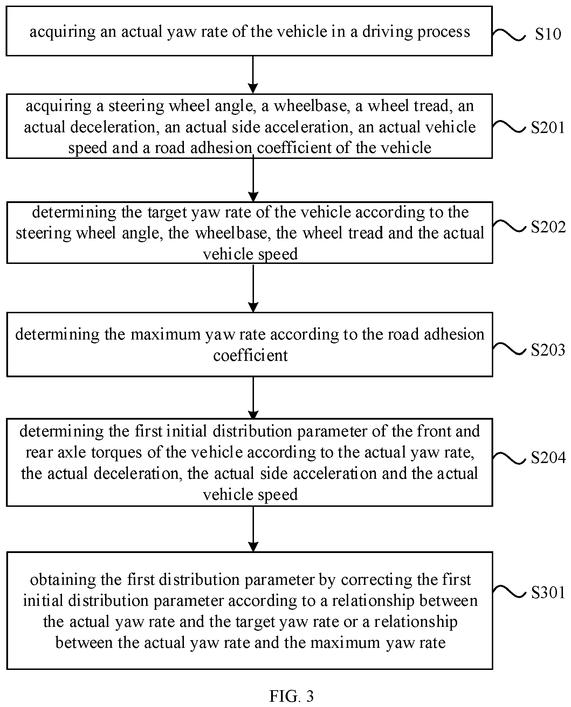

In some embodiments, as illustrated in FIG. 3, an implementation of step S20 may include the following steps.

At S201, a steering wheel angle, a wheelbase, a wheel tread, an actual deceleration, an actual lateral acceleration, an actual vehicle speed and a road adhesion coefficient of the vehicle are acquired.

The steering wheel angle, the wheelbase, the wheel tread, the actual deceleration, the actual lateral acceleration, the actual vehicle speed and the road adhesion coefficient of the vehicle, and other parameters are acquired first.

The steering wheel angle of the vehicle is an angle corresponding to rotation of the steering wheel by a user in the driving process of the vehicle, the wheelbase of the vehicle refers to a distance between two perpendicular lines passing through middle points of two adjacent wheels on a same side and perpendicular to a longitudinal symmetry plane of the vehicle, the wheel tread of the vehicle refers to a distance between center lines of trajectories left by wheels of the vehicle on a vehicle supporting plane (generally, the ground), the actual deceleration refers to a deceleration of the vehicle acquired by a sensor, the actual lateral acceleration refers to a vehicle speed acquired by a sensor, the actual lateral acceleration refers to an acceleration perpendicular to a movement direction of the vehicle acquired by a sensor, and the road adhesion coefficient refers to an adhesion capacity of tires of the vehicle on different roads.

At S202, the target yaw rate of the vehicle is determined according to the steering wheel angle, the wheelbase, the wheel tread and the actual vehicle speed.

Determining the target yaw rate of the vehicle according to the steering wheel angle, the wheelbase, the wheel tread and the actual vehicle speed includes: determining an initial yaw rate according to the steering wheel angle, the wheelbase, the wheel tread and the actual vehicle speed; obtaining an initial yaw rate correction parameter according to the actual vehicle speed and a characteristic vehicle speed; and determining the target yaw rate of the vehicle according to the initial yaw rate and the initial yaw rate correction parameter.

First, the initial yaw rate of the vehicle is determined according to the steering wheel angle, the wheelbase, the wheel tread and the actual vehicle speed. Specifically, a minimum radius is determined based on the steering wheel angle, the wheelbase and the wheel tread:

$$R_{min} = \left[ \left( L^2 + \left( K + L \middle/ \tan\alpha \right)^2 \right) \right]^{1/2}$$

where, L is a wheelbase, K is a wheel tread, $\alpha$ is a steering wheel angle, and $R_{min}$ is a minimum radius.

Then, the initial yaw rate of the vehicle is determined based on a relationship among the minimum radius, the initial yaw rate and the actual vehicle speed:

$$Yaw\text{-}Rate = VehSpd \middle/ R_{min}$$

where, VeSpd is an actual vehicle speed, and Yaw-Rate is an initial yaw rate.

The initial yaw rate correction parameter is obtained according to the actual vehicle speed and the characteristic vehicle speed.

The actual vehicle speed may be acquired based on a vehicle sensor, and the characteristic vehicle speed is a corresponding vehicle speed when the vehicle normally responds to a control action of a driver.

After the actual vehicle speed and the characteristic vehicle speed are determined, the initial yaw rate correction parameter is determined according to a ratio of the actual vehicle speed to the characteristic vehicle speed; and the target yaw rate of the vehicle is determined by performing multiplication operation on the initial yaw rate and the initial yaw rate correction parameter.

At S203, the maximum yaw rate is determined according to the road adhesion coefficient.

Maximum yaw rates corresponding to different road adhesion coefficients are different. Through searching a relationship table of the road adhesion coefficient and the maximum yaw rate, the maximum yaw rate corresponding to the obtained road adhesion coefficient is searched from the relationship table of the road adhesion coefficient and the maximum yaw rate on the basis of the obtained road adhesion coefficient.

At S204, the first initial distribution parameter of the front and rear axle torques of the vehicle is determined according to the actual yaw rate, the actual deceleration, the actual lateral acceleration and the actual vehicle speed.

Determining the first initial distribution parameter of the front and rear axle torques of the vehicle according to the actual yaw rate, the actual deceleration, the actual lateral acceleration and the actual vehicle speed includes: determining a first sub-initial distribution parameter of the front and rear axle torques of the vehicle according to the actual yaw rate and the actual deceleration; determining a second sub-initial distribution parameter of the front and rear axle torques of the vehicle according to the actual lateral acceleration and the actual vehicle speed; and determining the first initial distribution parameter according to the first sub-initial distribution parameter and the second sub-initial distribution parameter.

In some embodiments, in an actual running process of the vehicle, the actual yaw rate, the actual deceleration, the actual lateral acceleration and the actual vehicle speed may be acquired in real time. The first sub-initial distribution parameter of the front and rear axle torques of the vehicle corresponding to the current actual yaw rate and the actual deceleration is determined by obtaining the actual yaw rate, the actual deceleration, the actual lateral acceleration, the actual vehicle speed, and other parameters during the running process of the vehicle and searching a correlation table of the actual yaw rate, the actual deceleration and distribution of the front and rear axle torques of the vehicle (the correlation table is a known table created by the user based on historical data). In addition, the second sub-initial distribution parameter of the front and rear axle torques of the vehicle corresponding to the current actual lateral acceleration and the actual vehicle speed is determined by searching a correlation table of the actual lateral acceleration, the actual vehicle speed and distribution of the front and rear axle torques of the vehicle. Then the first initial distribution parameter and the second initial distribution parameter are fused to obtain the first initial distribution parameter.

In an implementation, a multiplication operation may be performed on the first initial distribution parameter and the second initial distribution parameter, to achieve fusion of the first initial distribution parameter and the second initial distribution parameter.

When the method for distributing the energy recovery torque of the vehicle includes step S20, an implementation of step S30 includes following steps.

At S301, the first distribution parameter is obtained by correcting the first initial distribution parameter according to a relationship between the actual yaw rate and the target yaw rate or a relationship between the actual yaw rate and the maximum yaw rate.

After the actual yaw rate, the target yaw rate and the maximum yaw rate of the vehicle are obtained, the first distribution parameter is obtained by correcting the first initial distribution parameter according to the relationship between the actual yaw rate and the target yaw rate or the relationship between the actual yaw rate and the maximum yaw rate.

In some embodiments, when the actual yaw rate of the vehicle is less than the target yaw rate or the maximum yaw rate of the vehicle, the actual yaw rate of the vehicle is further increased by correcting the first initial distribution parameter. When the actual yaw rate of the vehicle is greater than the target yaw rate or the maximum yaw rate of the vehicle, the actual yaw rate of the vehicle is decreased by correcting the first initial distribution parameter. The stability of the vehicle is ensured by correcting the actual yaw rate of the vehicle.

It needs to be noted that, in the above embodiments, the first distribution parameter is obtained by correcting the first initial distribution parameter according to the relationship between the actual yaw rate and the target yaw rate or the relationship between the actual yaw rate and the maximum yaw rate. In an implementation, the first distribution parameter may be obtained by correcting the first initial distribution parameter simultaneously according to the relationship between the actual yaw rate and the target yaw rate and the relationship between the actual yaw rate and the maximum yaw rate, which furthers ensures stability of the vehicle.

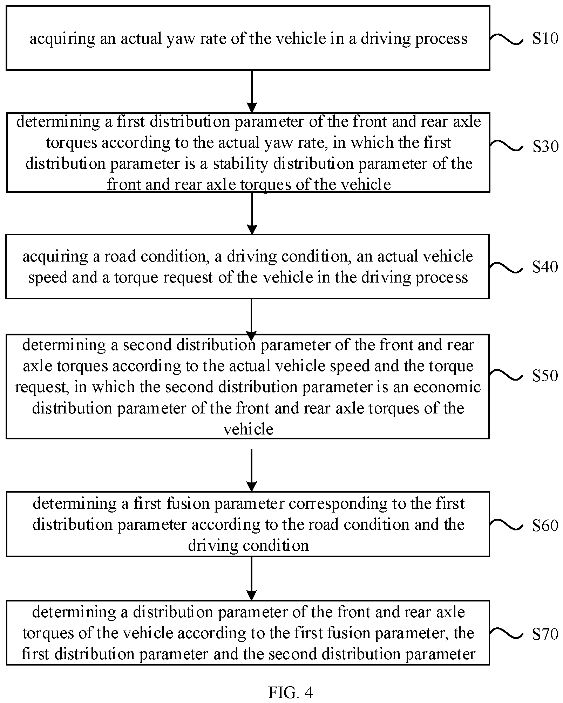

FIG. 4 is a flowchart illustrating another method for distributing an energy recovery torque of a vehicle according to an embodiment of the present disclosure. The embodiment of the present disclosure is on the basis of the above-mentioned embodiments. As illustrated in FIG. 4, the method for distributing the energy recovery torque of the vehicle includes following steps.

At S40, a road condition, a driving condition, an actual vehicle speed and a torque request of the vehicle in the driving process are acquired.

The actual vehicle speed may be acquired based on a speed sensor of the vehicle. The torque request may be determined based on throttle opening of the vehicle. The road condition includes a high-adhesion road condition, a snow road condition and an ice road condition, etc. The driving condition includes a curve condition, a uniform velocity condition, etc. The curve condition includes a large steering condition and a small steering condition. The constant speed condition includes a strong deceleration condition and a weak deceleration condition.

At S50, a second distribution parameter of the front and rear axle torques is determined according to the actual vehicle speed and the torque request. The second distribution parameter is an economic distribution parameter of the front and rear axle torques of the vehicle.

After the actual vehicle speed and the torque request of the vehicle are acquired, the distribution parameter of the front and rear axle torques corresponding to the actual vehicle speed and the distribution parameter of the front and rear axle torques corresponding to the torque request are respectively searched from a vehicle energy recovery torque distribution efficiency table. Then, the second distribution parameter is determined based on the searched distribution parameter of the front and rear axle torques corresponding to the actual vehicle speed and the searched distribution parameter of the front and rear axle torques corresponding to the torque request.

The second distribution parameter of the front and rear axle torques refers to a distribution parameter for distributing torque values of an engine to the front and rear axles of the vehicle based on a vehicle stability consideration during vehicle braking. For example, if the second distribution parameter of the front and rear axle torques is (0.3, 0.7), and the torque value of the engine during braking of the vehicle is 200, a torque value distributed to the front axle of the vehicle is 60, and a torque value distributed to the rear axle of the rear vehicle is 140.

In an implementation, after the distribution parameter of the front and rear axle torques corresponding to the actual vehicle speed and the distribution parameter of the front and rear axle torques corresponding to the torque request are respectively searched from the vehicle energy recovery torque distribution efficiency table, the distribution parameter of the front and rear axle torques with optimal torque distribution efficiency may be selected as the second distribution parameter. For example, if the torque distribution efficiency corresponding to the actual vehicle speed is optimal, the distribution parameter of the front and rear axle torques corresponding to the actual vehicle speed in the vehicle energy recovery torque distribution efficiency table is selected as the second distribution parameter; if the torque distribution efficiency corresponding to the torque request is optimal, the distribution parameter of the front and rear axle torques corresponding to the torque rest in the vehicle energy recovery torque distribution efficiency table is selected as the second distribution parameter.

In other implementations, the second distribution parameter may be determined by weighting the distribution parameter of the front and rear axle torques corresponding to the actual vehicle speed and the distribution parameter of the front and rear axle torques corresponding to the torque request searched from the vehicle energy recovery torque distribution efficiency table. In this case, a weight value corresponding to the distribution parameter of the front and rear axle torques corresponding to the actual vehicle speed and a weight value corresponding to the distribution parameter of the front and rear axle torques corresponding to the torque request are related to torque distribution efficiency in the torque distribution efficiency table. For example, if the torque distribution efficiency corresponding to the actual vehicle speed in the distribution efficiency table is better than the torque distribution efficiency corresponding to the torque request in the distribution efficiency table, the weight value corresponding to the distribution parameter of the front and rear axle torques corresponding to the actual vehicle speed is greater than the weight value corresponding to the distribution parameter of the front and rear axle torques corresponding to the torque request. For example, the weight value corresponding to the distribution parameter of the front and rear axle torques corresponding to the actual vehicle speed is set to 0.7, and the weight value corresponding to the distribution parameter of the front and rear axle torques is set to 0.3, which will not be limited in the embodiments of the disclosure.

At S60, a first fusion parameter corresponding to the first distribution parameter is determined according to the road condition and the driving condition.

The first fusion parameter is a corresponding fusion coefficient when the first distribution parameter and the second distribution parameter are fused, after the front and rear axis torques of the vehicle are distributed based on the first distribution parameter and the front and rear axis torques of the vehicle are distributed based on the second distribution parameter, while considering a stability factor and an economical factor of the vehicle in the method for distributing the energy recovery torque of the vehicle.

At S70, a distribution parameter of the front and rear axle torques of the vehicle is determined according to the first fusion parameter, the first distribution parameter and the second distribution parameter.

In some embodiments, determining the distribution parameter of the front and rear axle torques of the vehicle according to the first fusion parameter, the first distribution parameter or the second distribution parameter includes: determining a second fusion parameter corresponding to the second distribution parameter according to the first fusion parameter; determining a front axle torque distribution parameter of the vehicle according to the first fusion parameter, the first front axle torque distribution parameter, the second fusion parameter and the second front axle torque distribution parameter; and determining a rear axle torque distribution parameter of the vehicle according to the first fusion parameter, the first rear axle torque distribution parameter, the second fusion parameter and the second rear axle torque distribution parameter.

The second fusion parameter corresponding to the second distribution parameter is determined based on the first fusion parameter. Then, a multiplication operation is performed on the first fusion parameter and the first distribution parameter, and a multiplication operation is performed on the second fusion parameter and the second distribution parameter. The distribution parameter of the front and rear axle torques of the vehicle is determined based on a multiplication operation result of the first fusion parameter and the first distribution parameter and a multiplication operation result of the second fusion parameter and the second distribution parameter.

For example, if the first fusion parameter is a1, the second fusion parameter corresponding to the second distribution parameter is (1-a1), the first distribution parameter is (0.3, 0.7), and the second distribution parameter is (0.4, 0.6), the distribution parameter of the front and rear axle torques of the vehicle determined is a1(0.3, 0.7)+(1-a1)(0.4, 0.6). The front axle torque distribution parameter of the vehicle is 0.3a1+0.4(1-a1). The rear axle torque distribution parameter of the vehicle is 0.7a1+0.6(1-a1).

In the method for distributing the energy recovery torque of the vehicle in the embodiments of the disclosure, in the process of distributing the energy recovery torque of the vehicle, the energy recovery torque of the vehicle is distributed based on the stability consideration and the first distribution parameter is determined, and the energy recovery torque of the vehicle is distributed based on the economy consideration and the second distribution parameter is determined. Then, the first distribution parameter and the second distribution parameter are fused based on the first fusion parameter. That is, in the method for distributing the energy recovery torque of the vehicle, the economy and stability of the vehicle are considered. In the process of distributing the energy recovery torque of the vehicle, the stability of the vehicle is enhanced while the economy of energy recovery of the vehicle is ensured.

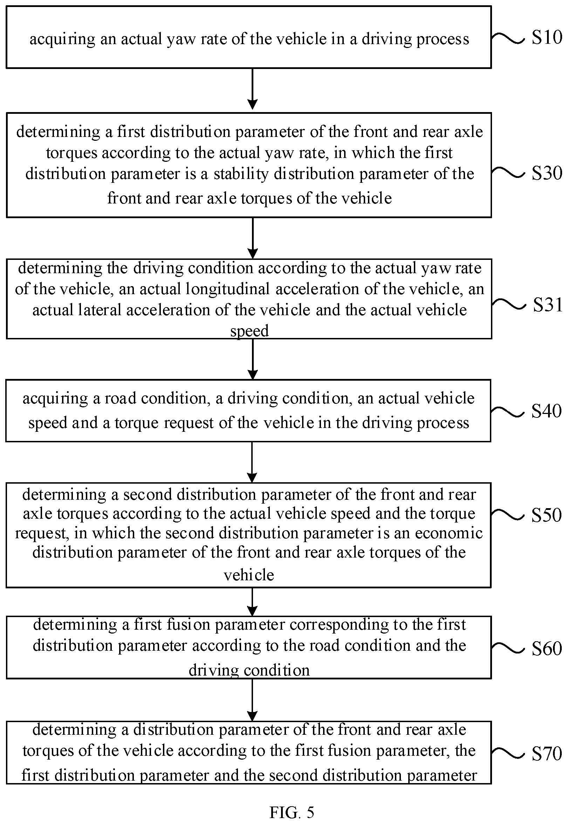

FIG. 5 is a flowchart illustrating another method for distributing an energy recovery torque of a vehicle according to an embodiment of the present disclosure. The embodiment of the present disclosure is on the basis of the embodiment corresponding to FIG. 4. As illustrated in FIG. 5, the method for distributing the energy recovery torque of the vehicle includes following steps.

At S31, the driving condition is determined according to the actual yaw rate of the vehicle, an actual longitudinal acceleration of the vehicle, an actual lateral acceleration of the vehicle and the actual vehicle speed.

The driving condition includes a curve condition and a uniform velocity condition

In some embodiments, the curve condition of the vehicle is determined according to a relationship of the actual yaw rate of the vehicle and the actual longitudinal acceleration of the vehicle, and the uniform velocity condition of the vehicle is determined based on a relationship between the actual lateral acceleration of the vehicle and the actual vehicle speed.

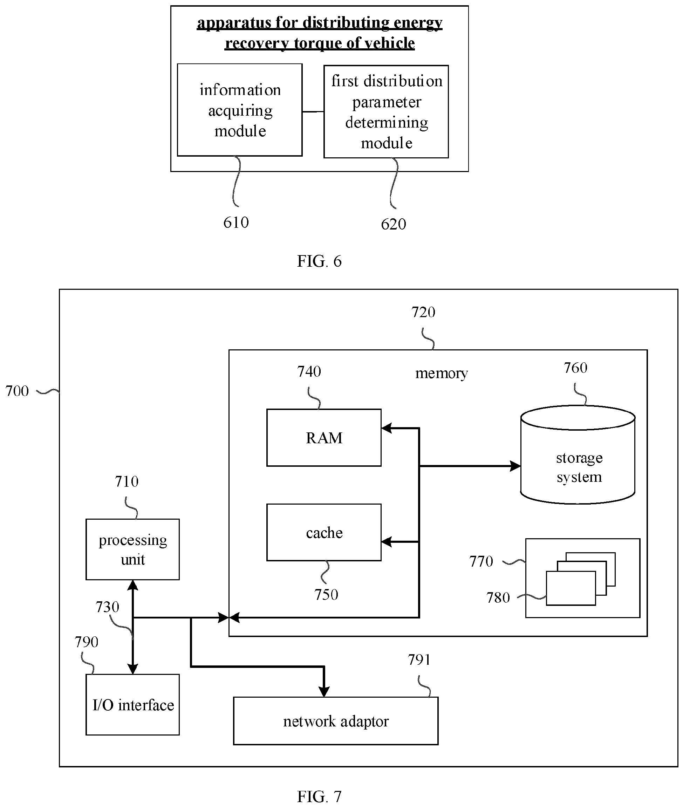

FIG. 6 is a structural diagram illustrating an apparatus for distributing an energy recovery torque of a vehicle according to an embodiment of the present disclosure. The apparatus includes:

an information acquiring module 610, configured to acquire an actual yaw rate of vehicle in a driving process.

a first distribution parameter determining module 620, configured to determine a first distribution parameter of front and rear axle torques according actual yaw rate. The first distribution parameter is a stability distribution parameter of the front and rear axle torques of the vehicle.

The apparatus for distributing the energy recovery torque of the vehicle in the embodiment of the disclosure acquires the actual yaw rate of the vehicle in the driving process first; and determines the first distribution parameter of the front and rear axle torques according to the actual yaw rate of the vehicle. Since the first distribution parameter of the front and rear axle torques is determined according to the actual yaw rate, the first distribution parameter of the front and rear axle torques can be determined according to the yaw rate in the actual driving process of the vehicle, which ensures safety of the vehicle.

In some embodiments, the apparatus further includes:

a first initial distribution parameter determining module, configured to determine a target yaw rate of the vehicle, a maximum yaw rate of the vehicle, and a first initial distribution parameter of the front and rear axle torques of the vehicle.

In this case, an implementation of the first distribution parameter determining module includes: obtaining the first distribution parameter by correcting the first initial distribution parameter according to a relationship between the actual yaw rate and the target yaw rate or a relationship between the actual yaw rate and a maximum yaw acceleration.

In some embodiments, the first initial distribution parameter determining module includes:

a vehicle parameter acquiring unit, configured to acquire a steering wheel angle, a wheelbase, a wheel tread, an actual deceleration, an actual lateral acceleration, an actual vehicle speed and a road adhesion coefficient of the vehicle;

a target yaw rate determining unit, configured to determine the target yaw rate of the vehicle according to the steering wheel angle, the wheelbase, the wheel tread and the actual vehicle speed;

a maximum yaw rate determining unit, configured to determine the maximum yaw rate according to the road adhesion coefficient; and

a first initial distribution parameter determining unit, configured to determine the first initial distribution parameter of the front and rear axle torques of the vehicle according to the actual yaw rate, the actual deceleration, the actual lateral acceleration and the actual vehicle speed.

In some embodiments, an implementation of the target yaw rate determining unit includes:

determining an initial yaw rate according to the steering wheel angle, the wheelbase, the wheel tread and the actual vehicle speed;

obtaining an initial yaw rate correction parameter according to the actual vehicle speed and a characteristic vehicle speed, in which the characteristic vehicle speed is a vehicle speed that the vehicle responds to a control action; and

determining the target yaw rate of the vehicle according to the initial yaw rate and the initial yaw rate correction parameter.

An implementation of the first initial distribution parameter determining module includes:

determining a first sub-initial distribution parameter of the front and rear axle torques of the vehicle according to the actual yaw rate and the actual deceleration;

determining a second sub-initial distribution parameter of the front and rear axle torques of the vehicle according to the actual lateral acceleration and the actual vehicle speed; and

determining the first initial distribution parameter according to the first sub-initial distribution parameter and the second sub-initial distribution parameter.

In some embodiments, the apparatus further includes:

a condition acquiring module, configured to acquire a road condition, a driving condition, an actual vehicle speed and a torque request of the vehicle in the driving process;

a second distribution parameter determining module, configured to determine a second distribution parameter of the front and rear axle torques according to the actual vehicle speed and the torque request. The second distribution parameter is an economic distribution parameter of the front and rear axle torques of the vehicle;

a fusion parameter determining module, configured to determine a first fusion parameter corresponding to the first distribution parameter according to the road condition and the driving condition; and

a torque distribution parameter determining module, configured to determine a distribution parameter of the front and rear axle torques of the vehicle according to the first fusion parameter, the first distribution parameter and the second distribution parameter.

In some embodiments, an implementation of the torque distribution parameter determining module includes:

determining a second fusion parameter corresponding to the second distribution parameter according to the first fusion parameter;

determining a front axle torque distribution parameter of the vehicle according to the first fusion parameter, the first front axle torque distribution parameter, the second fusion parameter and the second front axle torque distribution parameter; and

determining a rear axle torque distribution parameter of the vehicle according to the first fusion parameter, the first rear axle torque distribution parameter, the second fusion parameter and the second rear axle torque distribution parameter.

In some embodiments, the apparatus further includes:

a driving condition determining module, configured to determine the driving condition according to the actual yaw rate of the vehicle, an actual longitudinal acceleration of the vehicle, an actual lateral acceleration of the vehicle and the actual vehicle speed.

The apparatus provided in the embodiments of the present disclosure can perform the methods provided in any embodiment of the present disclosure, and possess corresponding function modules that perform the method and beneficial effects.

It is worth noting that units and modules included in the apparatus embodiments are only divided according to the functional logic, but are not limited to the above division, as long as the corresponding functions may be achieved. In addition, specific names of functional units are only for the convenience of distinguishing from each other and are not used to limit the protection scope of the disclosure.

An electronic device is further provided in the disclosure, and includes a processor. The processor is configured to execute a computer program stored in a memory. When the computer program is executed by the processor, steps of the method embodiments are implemented.

FIG. 7 is a structural diagram illustrating an electronic device provided by the present disclosure. FIG. 7 illustrates an example electronic device suitable for implementing the implementations of the embodiments of the present disclosure. The electronic device illustrated in FIG. 7 is only an example and should not bring any limitation on the function or application range of the embodiments of the present disclosure.

As illustrated in FIG. 7, an electronic device 700 is represented in the form of a general purpose computing device. Components of the electronic device 700 may include but not limited to one or more processors 710, a system memory 720, a bus 730 connected to different system components (including the system memory 720 and the processor), an input/output (I/O) interface 790 and a network adaptor 791.

The bus 730 represents one or more of several types of bus structures, including a memory bus or a memory controller, a peripheral bus, a graphics acceleration port, a processor, or a local bus with any of a plurality of bus structures. For example, the architectures include, but are not limited to, an industry standard architecture (ISA) bus, a micro channel architecture (MAC) bus, an enhanced ISA bus, a video electronics standards association (VESA) local bus and a peripheral component interconnection (PCI) bus.

The electronic device 700 includes a variety of computer system readable media. The media may be any media that may be accessed by the electronic device 700, including volatile and non-volatile media, and removable and non-removable media.

The system memory 720 may include a computer system readable medium in the form of a volatile memory, for example, a random access memory (RAM) 740 and/or a cache memory 750. The electronic device 700 may further include other volatile and non-volatile media, and removable and non-removable media. As an example only, a storage system 760 may be configured to read and write a non-removable and non-volatile magnetic medium (commonly referred to as a "hard disk drive"). A disk drive for reading and writing a removable non-volatile magnetic disk (for example, a "floppy disk") and an optical disk drive for reading and writing a removable non-volatile optical disk (such as a CD-ROM, a DVD-ROM or other optical media) may be provided. In these cases, each driver may be connected to the bus 730 via one or more data media interfaces. The system memory 720 may include at least one program product having a set of (for example, at least one) program modules configured to perform functions of the embodiments of the present disclosure.

A program/utility 780 having a set of (at least one) program modules 770 may be stored, and for example, may be stored in the memory 720. The program modules 770 include but not limited to, an operating system, one or more applications, other program modules and program data, and each or a certain of combination of these examples may include implementations of a network environment. The program modules 770 generally perform functions and/or methods in the embodiments.

The processor 710 executes various function applications and information processing by running at least one program stored in a plurality of programs in the system memory 720, for example, implements the method embodiments in the embodiments of the present disclosure.

A computer-readable storage medium storing a computer program is further provided in the present disclosure. When the computer program is executed by a processor, steps of the above method embodiments are implemented.

Any combination of one or more computer-readable media may be adopted. The computer-readable storage medium may be a computer-readable signal medium or a computer-readable storage medium. The computer-readable storage medium may be but not limited to an electrical, magnetic, optical, electromagnetic, infrared, or semiconductor system, apparatus or device, or any combination of the above. More specific examples of the computer-readable storage medium (a non-exhaustive list) include an electronic connector with one or more cables, a portable computer disk, a hardware, a random access memory (RAM), a read-only memory (ROM), an erasable programmable read-only ROM(an EPROM or a flash memory),an optical fiber device, and a portable compact disk read-only memory (CD-ROM), an optical storage device, a magnetic storage device, or any appropriate combination of above. In the present disclosure, a computer-readable storage medium may be any tangible medium that may contain or store a program for use by or in connection with an instruction execution system, apparatus, or device.

The computer-readable signal medium may include a data signal transmitted in a baseband or as a part of a carrier wave, which carries a computer readable program code. The transmitted data signal may take many forms, including but not limited to, an electromagnetic signal, an optical signal, or any suitable combination of the above. The computer-readable signal medium further may be any computer-readable medium other than the computer-readable medium. The computer-readable medium may send, propagate or transmit a program for use by or in connection with an instruction execution system, apparatus, or device.

The program code included on the computer-readable medium may be transmitted by any suitable medium, including but not limited to a wireless, an electric cable, an optical fiber cable, an RF, or any suitable combination of the foregoing.

A computer program code for performing operations of the disclosure may be written in one or more programming languages or their combination. The programming language includes an object-oriented programming language such as Java, Smalltalk and C++, and further includes a conventional procedural programming language such as "C" language or similar programing language. The program code may be executed entirely on a user computer, partly on a user computer, as a stand-alone software package, partly on a user computer and partly on a remote computer or entirely on a remote computer or a server. In the case of a remote computer, the remote computer may be connected to the user computer via any kind of network, including a local area network (LAN) or a wide area network (WAN) domain or may be connected to an external computer (for example, connected via the Internet by using an Internet service provider).

A computer program product is further provided in the present disclosure. When the computer program product runs on a computer, the computer is caused to perform steps of the method embodiments.

It should be noted that relational terms such as "first" and "second" are used herein to distinguish one entity or operation from another entity or operation without necessarily requiring or implying any such actual relationship or order between such entities or operations. And, the terms "comprise", "comprising" or any other variations thereof, are intended to cover a non-exclusive inclusion, such that a process, a method, an article or a device including a series of elements not only includes those elements but also includes other elements not expressly listed, or may further include elements inherent to such process, method, article, or device. In the absence of more constraints, the elements defined by a sentence "comprising a" do not preclude the presence of additional same elements in the process, method, article, or apparatus that includes the elements.

The foregoing is merely specific implementations of the present disclosure, so that those skilled in the art may understand or implement the present disclosure. Various modifications to the embodiments will be apparent to those skilled in the art, and general principles defined herein may be implemented in other embodiments without departing from the spirit or scope of the present disclosure. Therefore, the present disclosure may not be limited to the embodiments described herein, but conform to the widest scope consistent with principles and novel features disclosed herein.

**Claims**

1. A method for distributing an energy recovery torque of a vehicle, comprising:

   acquiring an actual yaw rate of the vehicle in a driving process; and
   determining a first distribution parameter of front and rear axle torques according to the actual yaw rate, wherein the first distribution parameter is a stability distribution parameter of the front and rear axle torques of the vehicle.

2. The method according to claim 1, wherein before determining the first distribution parameter of the front and rear axle torques according to the actual yaw rate, the method further comprises:

   determining a target yaw rate of the vehicle, a maximum yaw rate of the vehicle, and a first initial distribution parameter of the front and rear axle torques of the vehicle;
   wherein determining the first distribution parameter of the front and rear axle torques according to the actual yaw rate comprises:
   obtaining the first distribution parameter by correcting the first initial distribution parameter according to a relationship between the actual yaw rate and the target yaw rate or a relationship between the actual yaw rate and a maximum yaw acceleration.

3. The method according to claim 2, wherein determining the target yaw rate of the vehicle, the maximum yaw rate of the vehicle, and the first initial distribution parameter of the front and rear axle torques of the vehicle comprises:

   acquiring a steering wheel angle, a wheelbase, a wheel tread, an actual deceleration, an actual lateral acceleration, an actual vehicle speed and a road adhesion coefficient of the vehicle;
   determining the target yaw rate of the vehicle according to the steering wheel angle, the wheelbase, the wheel tread and the actual vehicle speed;
   determining the maximum yaw rate according to the road adhesion coefficient; and
   determining the first initial distribution parameter of the front and rear axle torques of the vehicle according to the actual yaw rate, the actual deceleration, the actual lateral acceleration and the actual vehicle speed.

4. The method according to claim 3, wherein determining the target yaw rate of the vehicle according to the steering wheel angle, the wheelbase, the wheel tread and the actual vehicle speed comprises:

   determining an initial yaw rate according to the steering wheel angle, the wheelbase, the wheel tread and the actual vehicle speed;
   obtaining an initial yaw rate correction parameter according to the actual vehicle speed and a characteristic vehicle speed, wherein the characteristic vehicle speed is a vehicle speed that the vehicle responds to a control action; and
   determining the target yaw rate of the vehicle according to the initial yaw rate and the initial yaw rate correction parameter,
   and determining the first initial distribution parameter of the front and rear axle torques of the vehicle according to the actual yaw rate, the actual deceleration, the actual lateral acceleration and the actual vehicle speed comprises:

   determining a first sub-initial distribution parameter of the front and rear axle torques of the vehicle according to the actual yaw rate and the actual deceleration;
   determining a second sub-initial distribution parameter of the front and rear axle torques of the vehicle according to the actual lateral acceleration and the actual vehicle speed; and
   determining the first initial distribution parameter according to the first sub-initial distribution parameter and the second sub-initial distribution parameter.

5. The method according to claim 1, further comprising:

   acquiring a road condition, a driving condition, an actual vehicle speed and a torque request of the vehicle in the driving process;
   determining a second distribution parameter of the front and rear axle torques according to the actual vehicle speed and the torque request, wherein the second distribution parameter is an economic distribution parameter of the front and rear axle torques of the vehicle;
   determining a first fusion parameter corresponding to the first distribution parameter according to the road condition and the driving condition; and

determining a distribution parameter of the front and rear axle torques of the vehicle according to the first fusion parameter, the first distribution parameter and the second distribution parameter.

6. The method according to claim 5, wherein the first distribution parameter comprises a first front axle torque distribution parameter and a first rear axle torque distribution parameter, and the second distribution parameter comprises a second front axle torque distribution parameter and a second rear axle torque distribution parameter; wherein

determining the distribution parameter of the front and rear axle torques of the vehicle according to the first fusion parameter, the first distribution parameter and the second distribution parameter comprises:

determining a second fusion parameter corresponding to the second distribution parameter according to the first fusion parameter;
determining a front axle torque distribution parameter of the vehicle according to the first fusion parameter, the first front axle torque distribution parameter, the second fusion parameter and the second front axle torque distribution parameter; and
determining a rear axle torque distribution parameter of the vehicle according to the first fusion parameter, the first rear axle torque distribution parameter, the second fusion parameter and the second rear axle torque distribution parameter.

7. The method according to claim 5, wherein before acquiring the road condition, the driving condition, the actual vehicle speed and the torque request of the vehicle in the driving process, the method further comprises:
determining the driving condition according to the actual yaw rate of the vehicle, an actual longitudinal acceleration of the vehicle, an actual lateral acceleration of the vehicle and the actual vehicle speed.

8. An apparatus for distributing an energy recovery torque of a vehicle, comprising:

an information acquiring module, configured to acquire an actual yaw rate of the vehicle in a driving process; and
a first distribution parameter determining module, configured to determine a first distribution parameter of front and rear axle torques according to the actual yaw rate, wherein the first distribution parameter is a stability distribution parameter of the front and rear axle torques of the vehicle.

9. The apparatus according to claim 8, further comprising:

a first initial distribution parameter determining module, configured to determine a target yaw rate of the vehicle, a maximum yaw rate of the vehicle, and a first initial distribution parameter of the front and rear axle torques of the vehicle;
wherein the first distribution parameter determining module comprises:
obtaining the first distribution parameter by correcting the first initial distribution parameter according to a relationship between the actual yaw rate and the target yaw rate or a relationship between the actual yaw rate and a maximum yaw acceleration.

10. The apparatus according to claim 9, wherein the first initial distribution parameter determining module comprises:

a vehicle parameter acquiring unit, configured to acquire a steering wheel angle, a wheelbase, a wheel tread, an actual deceleration, an actual lateral acceleration, an actual vehicle speed and a road adhesion coefficient of the vehicle;
a target yaw rate determining unit, configured to determine the target yaw rate of the vehicle according to the steering wheel angle, the wheelbase, the wheel tread and the actual vehicle speed;
a maximum yaw rate determining unit, configured to determine the maximum yaw rate according to the road adhesion coefficient; and
a first initial distribution parameter determining unit, configured to determine the first initial distribution parameter of the front and rear axle torques of the vehicle according to the actual yaw rate, the actual deceleration, the actual lateral acceleration and the actual vehicle speed.

11. The apparatus according to claim 10, wherein the target yaw rate determining unit comprises:

determining an initial yaw rate according to the steering wheel angle, the wheelbase, the wheel tread and the actual vehicle speed;
obtaining an initial yaw rate correction parameter according to the actual vehicle speed and a characteristic vehicle speed, wherein the characteristic vehicle speed is a vehicle speed that the vehicle responds to a control action; and
determining the target yaw rate of the vehicle according to the initial yaw rate and the initial yaw rate correction parameter,
and the first initial distribution parameter determining module comprises:

determining a first sub-initial distribution parameter of the front and rear axle torques of the vehicle according to the actual yaw rate and the actual deceleration;
determining a second sub-initial distribution parameter of the front and rear axle torques of the vehicle according to the actual lateral acceleration and the actual vehicle speed; and
determining the first initial distribution parameter according to the first sub-initial distribution parameter and the second sub-initial distribution parameter.

12. The apparatus according to claim 8, further comprising:

a condition acquiring module, configured to acquire a road condition, a driving condition, an actual vehicle speed and a torque request of the vehicle in the driving process;
a second distribution parameter determining module, configured to determine a second distribution parameter of the front and rear axle torques according to the actual vehicle speed and the torque request, wherein the second distribution parameter is an economic distribution parameter of the front and rear axle torques of the vehicle;
a fusion parameter determining module, configured to determine a first fusion parameter corresponding to the first distribution parameter according to the road condition and the driving condition; and
a torque distribution parameter determining module, configured to determine a distribution parameter of the front and rear axle torques of the vehicle according to the first fusion parameter, the first distribution parameter and the second distribution parameter.

13. The apparatus according to claim 12, wherein the torque distribution parameter determining module comprises:

determining a second fusion parameter corresponding to the second distribution parameter according to the first fusion parameter;
determining a front axle torque distribution parameter of the vehicle according to the first fusion parameter, the first front axle torque distribution parameter, the second fusion parameter and the second front axle torque distribution parameter; and

determining a rear axle torque distribution parameter of the vehicle according to the first fusion parameter, the first rear axle torque distribution parameter, the second fusion parameter and the second rear axle torque distribution parameter.

14. The apparatus according to claim 12, further comprising:
a driving condition determining module, configured to determine the driving condition according to the actual yaw rate of the vehicle, an actual longitudinal acceleration of the vehicle, an actual lateral acceleration of the vehicle and the actual vehicle speed.

15. An electronic device, comprising:

one or more processors; and
a storage device for storing one or more programs,
wherein when the one or more programs are executed by the one or more processors, the one or more processors are caused to implement the method according to any one of claims 1 to 7.

16. A computer-readable storage medium having stored thereon a computer program, wherein when the computer program is executed by a processor, the method according to any one of claims 1 to 7 is implemented.

17. A computer program product comprising a computer program or instruction, wherein when the computer program or instruction is executed by a processor, the method according to any one of claims 1 to 7 is implemented.

acquiring an actual yaw rate of the vehicle in a driving process ⟶ S10

determining a first distribution parameter of the front and rear axle torques according to the actual yaw rate, in which the first distribution parameter is a stability distribution parameter of the front and rear axle torques of the vehicle ⟶ S30

FIG. 1

acquiring an actual yaw rate of the vehicle in a driving process ⟶ S10

determining a target yaw rate of vehicle, a maximum yaw rate of the vehicle, and a first initial distribution parameter of the front and rear axle torques of the vehicle ⟶ S20

obtaining the first distribution parameter by correcting the first initial distribution parameter according to a relationship between the actual yaw rate and the target yaw rate or a relationship between the actual yaw rate and the maximum yaw rate ⟶ S301

FIG. 2

acquiring an actual yaw rate of the vehicle in a driving process — S10

acquiring a steering wheel angle, a wheelbase, a wheel tread, an actual deceleration, an actual side acceleration, an actual vehicle speed and a road adhesion coefficient of the vehicle — S201

determining the target yaw rate of the vehicle according to the steering wheel angle, the wheelbase, the wheel tread and the actual vehicle speed — S202

determining the maximum yaw rate according to the road adhesion coefficient — S203

determining the first initial distribution parameter of the front and rear axle torques of the vehicle according to the actual yaw rate, the actual deceleration, the actual side acceleration and the actual vehicle speed — S204

obtaining the first distribution parameter by correcting the first initial distribution parameter according to a relationship between the actual yaw rate and the target yaw rate or a relationship between the actual yaw rate and the maximum yaw rate — S301

FIG. 3

acquiring an actual yaw rate of the vehicle in a driving process — S10

determining a first distribution parameter of the front and rear axle torques according to the actual yaw rate, in which the first distribution parameter is a stability distribution parameter of the front and rear axle torques of the vehicle — S30

acquiring a road condition, a driving condition, an actual vehicle speed and a torque request of the vehicle in the driving process — S40

determining a second distribution parameter of the front and rear axle torques according to the actual vehicle speed and the torque request, in which the second distribution parameter is an economic distribution parameter of the front and rear axle torques of the vehicle — S50

determining a first fusion parameter corresponding to the first distribution parameter according to the road condition and the driving condition — S60

determining a distribution parameter of the front and rear axle torques of the vehicle according to the first fusion parameter, the first distribution parameter and the second distribution parameter — S70

FIG. 4

acquiring an actual yaw rate of the vehicle in a driving process — S10

↓

determining a first distribution parameter of the front and rear axle torques according to the actual yaw rate, in which the first distribution parameter is a stability distribution parameter of the front and rear axle torques of the vehicle — S30

↓

determining the driving condition according to the actual yaw rate of the vehicle, an actual longitudinal acceleration of the vehicle, an actual lateral acceleration of the vehicle and the actual vehicle speed — S31

↓

acquiring a road condition, a driving condition, an actual vehicle speed and a torque request of the vehicle in the driving process — S40

↓

determining a second distribution parameter of the front and rear axle torques according to the actual vehicle speed and the torque request, in which the second distribution parameter is an economic distribution parameter of the front and rear axle torques of the vehicle — S50

↓

determining a first fusion parameter corresponding to the first distribution parameter according to the road condition and the driving condition — S60

↓

determining a distribution parameter of the front and rear axle torques of the vehicle according to the first fusion parameter, the first distribution parameter and the second distribution parameter — S70

FIG. 5

**apparatus for distributing energy recovery torque of vehicle**

| information acquiring module | first distribution parameter determining module |
|---|---|

610  620

FIG. 6

700

720

740    memory    760

RAM

storage system

cache

750

770

780

710

processing unit

730

790

791

I/O interface

network adaptor

FIG. 7

## INTERNATIONAL SEARCH REPORT

| | International application No. |
|---|---|
| | **PCT/CN2023/098553** |

**A.    CLASSIFICATION OF SUBJECT MATTER**

B60L15/20(2006.01)i;  B60L7/10(2006.01)i

According to International Patent Classification (IPC) or to both national classification and IPC

**B.    FIELDS SEARCHED**

Minimum documentation searched (classification system followed by classification symbols)

IPC: B60L

Documentation searched other than minimum documentation to the extent that such documents are included in the fields searched

Electronic data base consulted during the international search (name of data base and, where practicable, search terms used)

CNTXT, CNKI, ENTXTC, VEN: 横摆角速度, 横摆角速率, 扭矩, 能量回馈, 能量回收, 制动, yaw rate, yaw velocity, torque, energy recycl+, brak+

**C.    DOCUMENTS CONSIDERED TO BE RELEVANT**

| Category* | Citation of document, with indication, where appropriate, of the relevant passages | Relevant to claim No. |
|---|---|---|
| PX | CN 115431788 A (BEIJING CO WHEELS TECHNOLOGY CO., LTD.) 06 December 2022 (2022-12-06)<br>    description, paragraphs [0060]-[0162], and figures 1-7 | 1-17 |
| X | CN 113085578 A (ZHEJIANG GEELY AUTOMOBILE HOLDINGS LIMITED et al.) 09 July 2021 (2021-07-09)<br>    description, embodiment 2, and figures 2 and 6 | 1-3, 5, 7-10, 12, 14-17 |
| X | CN 106627168 A (CHONGQING CHANGAN AUTOMOBILE CO., LTD. et al.) 10 May 2017 (2017-05-10)<br>    description, paragraphs [0070]-[0155], and figures 1-3 | 1, 8, 15-17 |
| X | US 2018099677 A1 (NTN TOYO BEARING CO., LTD.) 12 April 2018 (2018-04-12)<br>    description, paragraphs [0046]-[0073], and figures 1-3 | 1, 8, 15-17 |
| A | CN 112752691 A (HUAWEI TECHNOLOGIES CO., LTD.) 04 May 2021 (2021-05-04)<br>    entire document | 1-17 |
| A | CN 113071332 A (CHINA FAW CO., LTD.) 06 July 2021 (2021-07-06)<br>    entire document | 1-17 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **14 August 2023** | **26 August 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/098553** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2016178758 A (FUJI HEAVY INDUSTRIES LTD.) 06 October 2016 (2016-10-06)<br>entire document | 1-17 |

Form PCT/ISA/210 (second sheet) (July 2022)

**INTERNATIONAL SEARCH REPORT**
Information on patent family members

| International application No. |
| --- |
| **PCT/CN2023/098553** |

| Patent document cited in search report | | | Publication date (day/month/year) | Patent family member(s) | | | Publication date (day/month/year) |
| --- | --- | --- | --- | --- | --- | --- | --- |
| CN | 115431788 | A | 06 December 2022 | None | | | |
| CN | 113085578 | A | 09 July 2021 | None | | | |
| CN | 106627168 | A | 10 May 2017 | None | | | |
| US | 2018099677 | A1 | 12 April 2018 | JP | 2016199195 | A | 01 December 2016 |
| | | | | JP | 6542017 | B2 | 10 July 2019 |
| | | | | WO | 2016167162 | A1 | 20 October 2016 |
| | | | | EP | 3284629 | A1 | 21 February 2018 |
| | | | | EP | 3284629 | A4 | 26 December 2018 |
| | | | | EP | 3284629 | B1 | 11 August 2021 |
| | | | | US | 10974706 | B2 | 13 April 2021 |
| CN | 112752691 | A | 04 May 2021 | None | | | |
| CN | 113071332 | A | 06 July 2021 | None | | | |
| JP | 2016178758 | A | 06 October 2016 | JP | 6449697 | B2 | 09 January 2019 |

Form PCT/ISA/210 (patent family annex) (July 2022)

**EP 4 538 098 A1**

**REFERENCES CITED IN THE DESCRIPTION**

**Patent documents cited in the description**

- CN 202210644873